# FASCICULE DE BREVET EUROPEEN

(11) **EP 1 880 190 B1**
(45) Date de publication et mention de la délivrance du brevet: **24.02.2016**
(21) Numéro de dépôt: 06755484.0
(22) Date de dépôt: 10.05.2006
(51) Int. Cl.: G01N 15/08, G01N 7/10, G01M 3/02

(54) **PROCEDE POUR LA MESURE DE PERMEABILITE AUX GAZ AVEC CONDITIONNEMENT RAPIDE ET INSTALLATION POUR LA MISE EN UVRE**
VERFAHREN ZUR MESSUNG DER DURCHLÄSSIGKEIT FÜR GASE MIT SCHNELLER KONDITIONIERUNG UND EINRICHTUNG ZUR DURCHFÜHRUNG DIESES VERFAHRENS
METHOD FOR MEASURING THE PERMEABILITY TO GASES WITH RAPID CONDITIONING AND INSTALLATION FOR CARRYING OUT THIS METHOD

(30) Priorité: 10.05.2005 FR 0504689
(43) Date de publication de la demande: 23.01.2008
(73) Titulaire: Sidel Participations, 76930 Octeville sur Mer (FR)
(72) Inventeur: PERNEL, Yann c/o Sidel Participations, F-76930 Octeville Sur Mer (FR)
(74) Mandataire: Siloret, Patrick
(86) Numéro de dépôt international: PCT/FR2006/001045
(87) Numéro de publication internationale: WO 2006/120345

(56) Documents cités:
- FR-A- 2 844 596
- US-A- 5 081 863
- US-A1- 2002 162 384
- US-A1- 2004 040 372
- US-B1- 6 450 012
- US-B1- 6 561 008

## Description

La présente invention se rapporte au domaine technique de la mesure de la perméabilité aux gaz de parois polymères telles que notamment, mais non exclusivement, les parois de corps creux comme les bouteilles, par exemple en polyethylène téréphtalate (PET).

Contrairement aux verres, aux métaux et alliages métalliques, et aux céramiques, les matériaux polymères sont relativement perméables aux gaz et à la vapeur d'eau. Le transfert d'oxygène au travers des parois d'un récipient contenant une boisson peut entraîner à terme une oxydation de certains composés tels que des vitamines, des acides gras et des protéines. De même, une perte d'arôme et plus généralement une perte de propriétés organoleptiques peuvent découler de faibles propriétés barrières d'un emballage alimentaire.

Sous le terme très général de perméabilité, trois mécanismes peuvent être distingués :
- sorption et désorption sur les parois internes des récipients ;
- diffusion au travers des parois des récipients ;
- migration de certains composés depuis le matériau polymère formant le récipient vers le contenu de ce récipient.

Les techniques de mesure de perméabilité des matériaux polymères concernent le plus souvent les matériaux en feuille et peuvent être regroupées en trois catégories : mesures à pression variable, mesures à volume variable, mesures dites isostatiques et isobares.

Divers appareils de mesure de perméabilité que ce soit à l'oxygène ou au dioxyde de carbone se trouvent sur le marché. Ainsi, sont notamment vendus, sous la dénomination Ox-tran ®, des appareils pour la mesure de perméabilité à l'oxygène ou sous la dénomination Permatran ® des appareils pour la mesure de perméabilité au dioxyde de carbone (cf. par exemple document US 6 699 320 (colonne 4 lignes 7 à 16)).

Lorsque l'on souhaite étudier les propriétés de perméation d'un emballage tridimensionnel en matière souple -telle que par exemple le PET- dans sa géométrie d'utilisation, on se contente actuellement de placer cet emballage dans une atmosphère de gaz testeur et de faire circuler à l'intérieur de l'emballage un flux de gaz porteur, le flux sortant étant acheminé à un appareil de détection et de mesure.

Il est toutefois nécessaire, compte tenu notamment de la sorbtion de l'oxygène, pour éviter les artéfacts, de purger au préalable les corps creux tels que des bouteilles, avant d'effectuer la mesure de perméabilité proprement dite. Cette première étape est dite « conditionnement » (conditioning).

A l'issue de ce conditionnement, un état stationnaire est atteint, état dans lequel des mesures de perméation peuvent être effectuées.

Pour réduire le temps de conditionnement, il a été proposé de mettre préalablement sous vide l'emballage polymère (voir US 2004/0177676), cette technique présentant des risques importants d'altération irrémédiable de l'emballage lors de la mesure.

Conventionnellement, après le conditionnement, pour la mesure de perméabilité à l'oxygène, de l'air ou de l'oxygène est introduit dans un flux continu d'un mélange comportant une forte proportion d'azote et une faible proportion d'hydrogène (compris entre 0,5% et 5% d'hydrogène, typiquement de deux pour cent d'hydrogène dans les appareils connus de mesure de perméabilité à l'oxygène). Ce flux continu est envoyé avec un débit très faible, de l'ordre de dix millilitres par minute. L'oxygène est emporté par de l'azote, gaz porteur, et la quantité d'oxygène est mesurée par coulométrie.

Si le matériau polymère testé présente de faibles propriétés barrière, de l'air est employé pour la mesure.

Pour les matériaux présentant a priori de bonnes voire très bonnes propriétés barrière, tels que notamment les récipients en PET revêtu de carbone amorphe par mise en oeuvre de technologies de revêtement par plasma, telle la technologie décrite dans le document EP 1 068 032 qui a été développée par la demanderesse, de l'oxygène est employé pour la mesure.

Pour la mesure de perméabilité au dioxyde de carbone, avec des appareils de mesure connus, trois méthodes sont prévues :
- une première dite d'accumulation, pour des matériaux présentant des valeurs de perméabilité inférieures à 55 cc par mètre carré et par jour. Dans cette première méthode, un capteur infrarouge compare le signal obtenu pour une quantité étalon de dioxyde de carbone dans une cellule étalon et la quantité de dioxyde de carbone qui a traversé le matériau polymère et s'est accumulée dans une cellule de mesure, de même volume que la cellule étalon ;
- une seconde méthode dite dynamique, employée pour des matériaux polymères présentant des valeurs de perméabilité supérieures à 50 cc par mètre carré et par jour. Dans cette deuxième méthode, lorsque le dioxyde de carbone passe au travers du matériau polymère à tester pour aller dans une cellule de mesure, une valeur de courant est obtenue par le capteur infrarouge. Lorsque cette valeur de courant évolue linéairement dans le temps, un régime stationnaire est atteint et le signal stationnaire obtenu est comparé avec celui obtenu lorsqu'une quantité déterminée de CO₂ est injectée dans un volume identique à celui de la cellule de mesure ;
- une troisième méthode dite en flux continu. Dans cette troisième méthode, employée pour des matériaux polymères ayant une perméabilité comprise entre 30 et 10 000 cc par mètre carré et par jour, et lorsqu'un grand nombre d'échantillons sont à tester, le dioxyde de carbone qui est passé au travers du matériau polymère est mélangé à de l'azote et c'est ce mélange qui passe en regard du capteur infrarouge. La valeur obtenue est comparée à celle d'un étalon.

Le conditionnement est une étape longue, qui vise à s'assurer que les conditions d'essais sont à l'équilibre.

Ce temps de conditionnement dépend de nombreux facteurs tels que propriétés barrières du matériau polymère, épaisseur du matériau polymère, température.

Lorsque la mesure est effectuée sur une bouteille, le temps de conditionnement est d'autant plus important que la surface développée de la bouteille est grande, comme il est indiqué dans le document FR-2 844 596.

Il est de routine pour un homme du métier que le temps de conditionnement soit de l'ordre de quinze à vingt heures, ce qui pose de nombreux problèmes pratiques pour le suivi des mesures. Il n'est par ailleurs pas possible, avec les techniques connues à ce jour de la demanderesse, d'effectuer plus d'une mesure par cellule et par 24 heures.

L'invention vise à fournir un procédé et une installation de conditionnement permettant une mesure beaucoup plus rapide et pourtant tout aussi précise et sûre.

A ces fins, l'invention se rapporte, selon un premier aspect, à procédé de mesure de la perméabilité aux gaz de la paroi d'un corps creux en matériau polymère, ledit procédé comprenant une première étape dite de conditionnement au cours de laquelle un gaz de balayage balaie ledit corps creux, et une deuxième étape, dite de mesure, au cours de laquelle un gaz de mesure est introduit dans ledit corps creux, le gaz de balayage et le gaz de mesure étant différents, caractérisé en ce que le débit du gaz de balayage est supérieur au débit du gaz de mesure, et en ce que l'envoi du gaz de mesure au cours de la deuxième étape de mesure est réalisé après évacuation du gaz de balayage de la première étape vers l'air ambiant extérieur de sorte que ledit gaz de balayage est envoyé dans ledit corps creux sans mélange avec ledit gaz de mesure.

Selon une mise en oeuvre, en regard de ladite paroi polymère, le débit du gaz de balayage est plus de dix fois plus élevé que le débit du gaz de mesure.

Selon une mise en oeuvre particulière, le débit de gaz de balayage est, en regard de ladite paroi, de l'ordre de 200 cc par minute, le débit de gaz de mesure étant, en regard de ladite paroi, de l'ordre de dix ml par minute.

Le gaz de balayage et le gaz de mesure sont différents. Ainsi, pour la mesure ou la perméabilité à l'oxygène, le gaz de balayage pourra être un gaz peu onéreux, tel que de l'azote standard industriel, le gaz de mesure étant lui plus onéreux, par exemple de l'azote mélangé avec une proportion d'hydrogène comprise entre 0,5% et 5%.

Dans une réalisation, le procédé comprend une étape de mesure d'une quantité de gaz par coulométrie, par exemple à l'aide d'un appareil Ox-tran ® fourni par la société Mocon ou d'un appareil similaire.

L'invention se rapporte, selon un deuxième aspect, à une installation pour la mise en oeuvre du procédé de mesure de la perméabilité de la paroi d'un corps creux en matériau polymère tel que présenté dans l'une quelconque des revendications précédentes, ladite installation comprenant un premier circuit d'un gaz de balayage apte à balayer le corps creux et un deuxième circuit d'un gaz de mesure introduit dans ledit corps creux, caractérisée en ce que lesdits premier et deuxième circuits sont en partie communs et connectés l'un à l'autre via des moyens de distribution fluidique de manière telle que le gaz de mesure est envoyé dans ledit corps creux sans mélange avec ledit gaz de mesure.

Dans une mise en oeuvre, les moyens de distribution comportent au moins deux entrées et une sortie et chaque entrée peut être mise sélectivement en communication avec la sortie.

Dans une mise en oeuvre, les moyens de distribution sont constitués par une vanne comportant aux moins deux voies pouvant être ouvertes séparément, lesquelles voies possèdent chacune une entrée et une sortie ; de préférence, les deux voies sont reliées au niveau de leur sortie, de sorte que la sortie peut être alimentée par l'une ou l'autre des voies.

Dans une mise en oeuvre particulière, une première entrée des moyens de distribution est connectée à une source de distribution de gaz de mesure associée à un appareil de mesure de quantité d'un gaz donné, par exemple de l'oxygène ou du dioxyde de carbone, une deuxième entrée des moyens de distribution est connectée à une source de gaz de balayage, et la sortie de la vanne est en communication de fluide avec une face de la paroi polymère, un conduit mettant par ailleurs en communication de fluide ladite face de paroi polymère et l'appareil de mesure de quantité de gaz.

L'invention se rapporte, selon un troisième aspect, à l'application du procédé ou de l'installation ci-dessus présentés à la mesure de la perméabilité à l'oxygène ou au dioxyde de carbone d'un corps creux, tel que par exemple un bouchon, une barquette ou une bouteille, notamment une bouteille en PET.

Raccourcissant nettement le temps de conditionnement, et ce sans risques de détérioration du corps creux, le procédé et l'installation selon l'invention trouvent un intérêt particulier dans la mesure de la perméabilité de récipients, tels que des bouteilles, en PET, fabriquées par soufflage (ou étirage/soufflage) dans des moules ou ayant subi un traitement consistant à déposer un revêtement barrière après leur fabrication, afin d'en améliorer l'imperméabilité aux gaz. En effet, tant lors des phases de réglage des machines de soufflage ou de traitement de récipients que lors de leurs phases de fonctionnement industriel, il est nécessaire de réaliser des mesures d'imperméabilité pour juger des bons réglages des machines et/ou de leur qualité de production. Ces mesures s'effectuent sur des récipients en nombre suffisant pour constituer des échantillons représentatifs, et l'invention permet donc d'analyser un échantillon de taille donnée plus rapidement qu'un dispositif de l'art antérieur ou encore, dans un même laps de temps d'analyser un échantillon de taille plus importante que ne le ferait un dispositif de l'art antérieur.

D'autres objets et avantages de l'invention apparaîtront au cours de la description suivante de modes de réalisation, description qui va être effectuée en se référant aux dessins annexés, dans lesquels :
- la figure 1 est une illustration schématique d'une installation de mesure de la perméabilité d'un corps creux comportant un dispositif de conditionnement selon un mode de réalisation, dans une première phase de fonctionnement ;
- la figure 2 est une illustration schématique de l'installation de la figure 1, dans une deuxième phase de fonctionnement.

L'installation 1 de mesure comprend un analyseur 2 de gaz, par exemple de type vendu sous la référence Mocon Ox-tran.

Cet analyseur 2 de gaz comporte une partie destinée à la fourniture de gaz de mesure et une cellule de mesure.

La sortie de gaz de mesure est connectée, par un premier conduit 3, à une première entrée 4a de moyens 4 de distribution fluidique du type quatre voies (plus précisément à deux entrées 4a, 4d, et à deux sorties 4b, 4c. Ainsi, les moyens 4 de distribution comportent au moins deux entrées 4a, 4d et une sortie 4b, et chaque entrée 4a, 4d peut être mise sélectivement en communication avec la sortie 4b. La cellule de mesure est connectée, par un deuxième conduit 5, au corps creux 6 à tester.

Un troisième conduit 7 relie la sortie 4b des moyens 4 de distribution au corps creux 6.

Un quatrième conduit 9 relie la sortie 4c des moyens 4 de distribution à l'air extérieur 8.

Enfin, un cinquième conduit 11 relie l'entrée 4d des moyens 4 de distribution à la source 10 de gaz de balayage.

De manière résumée, une première entrée 4a des moyens 4 de distribution est connectée à une source de distribution de gaz de mesure associée à un appareil de mesure 2 de quantité d'un gaz donné. Une deuxième entrée 4d des moyens 4 de distribution est connectée à une source 10 de gaz de balayage, et la sortie 4b de la vanne 4 est en communication de fluide avec une face de la paroi polymère, un conduit 5 mettant par ailleurs en communication de fluide la face de paroi polymère et l'appareil de mesure de quantité de gaz.

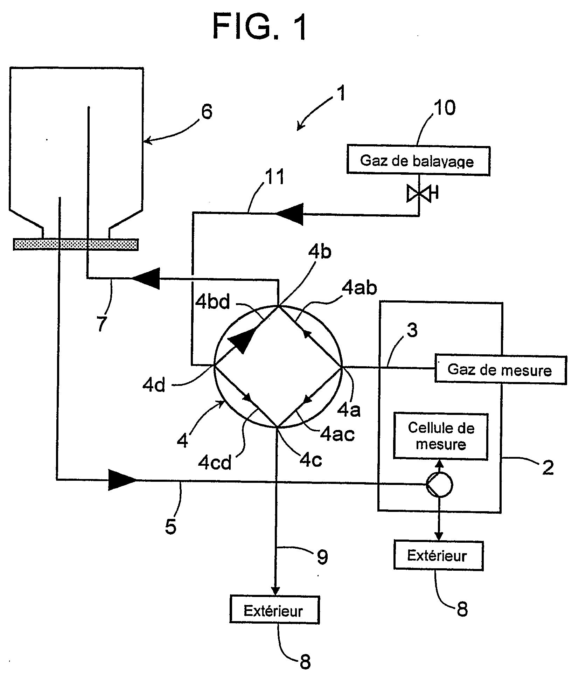

Dans un premier temps, représenté en figure 1, un gaz de balayage neutre, par exemple de l'azote, est envoyé, au travers du cinquième conduit 11, depuis la source 10 vers l'entrée 4d des moyens 4 de distribution, puis est entraîné par une voie 4bd desdits moyens 4 vers la sortie 4b de la vanne 4, pour aller vers le corps creux 6, via le troisième conduit 7.

Il convient de noter que lors de cette étape de balayage, seule la voie 4bd des moyens 4 est ouverte, les autres voies 4ab (qui relie l'entrée 4a à la sortie 4b), 4ac (qui relie l'entrée 4a à la sortie 4c) et 4cd (qui relie l'entrée 4d à la sortie 4c) étant fermées.

Ce gaz neutre balaie le corps creux 6 et en sort par le deuxième conduit 5, pour aller traverser l'analyseur 2, et être évacué vers l'air ambiant extérieur.

Ce gaz neutre est avantageusement envoyé à débit élevé, dans ce premier circuit, par exemple de l'ordre de 200 cc par minutes.

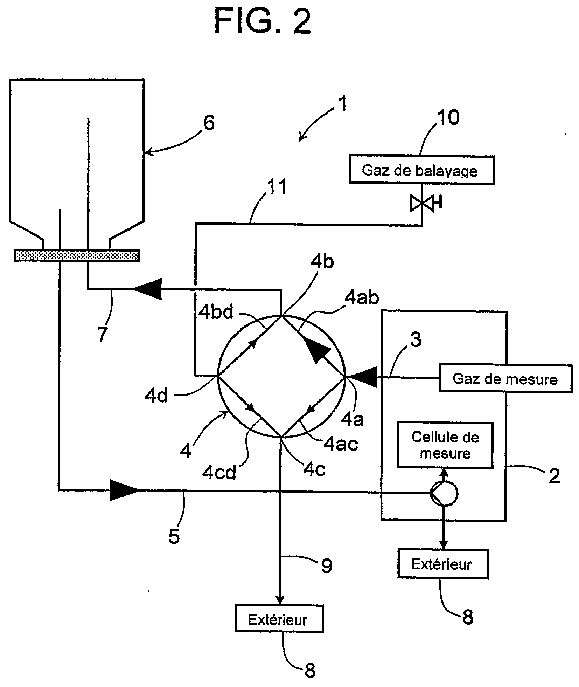

Dans un deuxième temps, représenté en figure 2, le gaz de mesure est envoyé vers la première entrée 4a des moyens 4, via le premier conduit 3 et ce gaz passe, par la voie 4ab, de la première entrée 4a vers la sortie 4b pour être introduit dans le corps creux 6, via le troisième conduit 7.

Le gaz de mesure est envoyé à un faible débit, de l'ordre de 10 ml par minute, et il sort du corps creux 6 par le deuxième conduit 5 pour aller vers la cellule de mesure de l'analyseur 2.

Il convient de noter que lors de cette étape de mesure, seule la voie 4ab des moyens 4 de distribution est ouverte, les autres voies 4bd (qui relie l'entrée 4d à la sortie 4b), 4ac (qui relie l'entrée 4a à la sortie 4c) et 4cd (qui relie l'entrée 4d à la sortie 4c) étant fermées.

Par les dispositions ci-dessus présentées, le circuit de gaz utilisé pour le conditionnement (premier temps représenté en figure 1) est en partie distinct du circuit de gaz utilisé pour la mesure de perméabilité (deuxième temps représenté en figure 2) et ce, contrairement aux perméamètres conventionnels.

Le corps creux 6 à tester peut ainsi être balayé, avant la mesure, par un premier gaz tel qu'azote, moins onéreux que le gaz de mesure, et ce premier gaz peut être envoyé sous fort débit dans le corps creux, sans risque de mélange avec le gaz de mesure.

Autrement dit, le procédé de mesure selon l'invention de la perméabilité aux gaz de la paroi d'un corps creux 6 en matériau polymère comprend une première étape dite de conditionnement au cours de laquelle un gaz de balayage balaie le corps creux 6, et une deuxième étape, dite de mesure, au cours de laquelle un gaz de mesure est introduit dans ledit corps creux 6, le débit du gaz de balayage étant supérieur au débit du gaz de mesure et le gaz de balayage étant envoyé dans le corps creux 6 sans mélange avec le gaz de mesure, le débit du gaz de balayage étant plus de dix fois plus élevé que le débit du gaz de mesure.

Préférentiellement, le gaz de balayage et le gaz de mesure sont différents, et de manière encore plus préférentielle pour la mesure de la perméabilité à l'oxygène, le gaz de balayage est de l'azote, le gaz de mesure étant alors de l'azote mélangé avec une proportion d'hydrogène comprise entre 0.5 et 5%.

De manière supplémentaire, le procédé selon l'invention comprend une étape de mesure d'une quantité de gaz par coulométrie.

Bien entendu, le corps creux à tester est fixé de manière étanche sur un support de mesure, de manière connue en soi.

Le temps nécessaire au bon conditionnement peut être contrôlé par des essais comparatifs traditionnels. La demanderesse a ainsi pu passer d'un temps de conditionnement de 16 heures à un temps d'une demi heure, pour une mesure de perméabilité d'une bouteille PET de 26.5 g.

Comme ceci a été noté auparavant, lors des étapes de balayage ou de mesure, les voies 4ac et 4cd des moyens 4 de distribution sont fermées. En fait, ces voies ne sont pas indispensables, mais sont préférables afin de faciliter la purge des circuits : à cet effet, la sortie 4c des moyens 4 de distribution est reliée à l'air extérieur, et les voies 4ac et 4cd sont alors ouvertes en cas de purge.

Il apparaît donc que la sortie 4c et les voies 4ac et 4cd ne sont pas indispensables, mais préférables.

Il est à noter que l'installation et le procédé selon l'invention ne modifient pas la structure et le fonctionnement des analyseurs de gaz, tels que par exemple Mocon Ox-tran.

De manière résumée, l'invention porte également sur une installation pour la mise en oeuvre du procédé de mesure de la perméabilité de la paroi d'un corps creux 6 en matériau polymère, caractérisée en ce qu'elle comprend un premier circuit d'un gaz de balayage apte à balayer le corps creux 6 et un deuxième circuit d'un gaz de mesure introduit dans le corps creux 6, ces deux circuits étant en partie communs et connectés l'un à l'autre via des moyens 4 de distribution fluidique de manière telle que le gaz de mesure est envoyé dans le corps creux 6 sans mélange avec le gaz de mesure.

Le procédé, tel que précédemment décrit, et l'installation, telle que précédemment décrite, s'appliquent plus particulièrement à la mesure de la perméabilité à l'oxygène ou au dioxyde de carbone d'un corps creux 6.

Il est entendu que le procédé et l'installation selon l'invention trouvent un intérêt particulier pour la mesure de perméabilités aux gaz de corps creux tels que bouteilles, mais que l'invention pourra être mise en oeuvre pour la mesure de perméabilités aux gaz de films.

## Revendications

1. Procédé de mesure de la perméabilité aux gaz de la paroi d'un corps creux (6) en matériau polymère, ledit procédé comprenant une première étape dite de conditionnement au cours de laquelle un gaz de balayage balaie ledit corps creux (6), et une deuxième étape, dite de mesure, au cours de laquelle un gaz de mesure est introduit dans ledit corps creux (6), le gaz de balayage et le gaz de mesure étant différents, **caractérisé en ce que** le débit du gaz de balayage est supérieur au débit du gaz de mesure, et **en ce que** l'envoi du gaz de mesure au cours de la deuxième étape de mesure est réalisé après évacuation du gaz de balayage de la première étape vers l'air ambiant extérieur de sorte que ledit gaz de balayage est envoyé dans ledit corps creux (6) sans mélange avec ledit gaz de mesure.

2. Procédé de mesure selon la revendication 1, **caractérisé en ce que** le débit du gaz de balayage est plus de dix fois plus élevé que le débit du gaz de mesure.

3. Procédé de mesure selon la revendication 1 ou 2, **caractérisé en ce que** le débit du gaz de balayage est de l'ordre de 200 cc par minute et **en ce que** le débit du gaz de mesure est de l'ordre de dix ml par minute.

4. Procédé de mesure selon l'une quelconque des revendications 1 à 3, **caractérisé en ce que**, pour la mesure de la perméabilité à l'oxygène, le gaz de balayage est de l'azote, le gaz de mesure étant alors de l'azote mélangé avec une proportion d'hydrogène comprise entre 0.5 et 5%.

5. Procédé de mesure selon l'une quelconque des revendications 1 à 4, **caractérisé en ce qu'**il comprend une étape de mesure d'une quantité de gaz par coulométrie.

6. Installation pour la mise en oeuvre du procédé de mesure de la perméabilité de la paroi d'un corps creux (6) en matériau polymère tel que présenté dans l'une quelconque des revendications précédentes, ladite installation comprenant un premier circuit d'un gaz de balayage apte à balayer le corps creux (6) et un deuxième circuit d'un gaz de mesure introduit dans ledit corps creux (6), **caractérisée en ce que** lesdits premier et deuxième circuits sont en partie communs et connectés l'un à l'autre via des moyens (4) de distribution fluidique de manière telle que le gaz de mesure est envoyé dans ledit corps creux (6) sans mélange avec ledit gaz de mesure.

7. Installation selon la revendication 6, **caractérisée en ce que** les moyens (4) de distribution comportent au moins deux entrées (4a ; 4d) et une sortie (4b) et **en ce que** chaque entrée (4a ; 4d) peut être mise sélectivement en communication avec la sortie (4b).

8. Installation selon la revendication 7, **caractérisée en ce qu'**une première entrée (4a) des moyens (4) est connectée à une source de distribution de gaz de mesure associée à un appareil de mesure (2) de quantité d'un gaz donné, une deuxième entrée (4d) des moyens (4) étant connectée à une source (10) de gaz de balayage, et la sortie (4b) de la vanne (4) étant en communication de fluide avec une face de ladite paroi polymère, un conduit (5) mettant par ailleurs en communication de fluide ladite face de paroi polymère et l'appareil de mesure de quantité de gaz.

9. Application du procédé selon l'une quelconque des revendications 1 à 5 ou de l'installation selon l'une quelconque des revendications 6 à 8 à la mesure de la perméabilité à l'oxygène ou au dioxyde de carbone d'un corps creux (6).

## Patentansprüche

1. Verfahren zum Messen der Gasdurchlässigkeit der Wand eines Hohlkörpers (6) aus Polymermaterial, wobei das Verfahren einen ersten sogenannten Konditionierungsschritt umfasst, im Laufe dessen ein Spülgas den Hohlkörper (6) spült, sowie einen zweiten sogenannten Messschritt, im Laufe dessen ein Messgas in den Hohlkörper (6) eingeleitet wird, wobei das Spülgas und das Messgas unterschiedlich sind, **dadurch gekennzeichnet, dass** die Flussrate des Spülgases höher als die Flussrate des Messgases ist, und dadurch, dass das Einleiten des Messgases im Laufe des zweiten Messschrittes nach dem Ableiten des Spülgases des ersten Schrittes in die äußere Umgebungsluft erfolgt, sodass das Spülgas in den Hohlkörper (6) eingeleitet wird, ohne sich mit dem Messgas zu vermischen.

2. Messverfahren nach Anspruch 1, **dadurch gekennzeichnet, dass** die Flussrate des Spülgases mehr als zehnmal höher als die Flussrate des Messgases ist.

3. Messverfahren nach Anspruch 1 oder 2, **dadurch gekennzeichnet, dass** die Flussrate des Spülgases in der Größenordnung von 200 cm³ pro Minute liegt und dadurch, dass die Flussrate des Messgases in der Größenordnung von zehn ml pro Minute liegt.

4. Messverfahren nach einem beliebigen der Ansprüche 1 bis 3, **dadurch gekennzeichnet, dass** es sich, zur Messung der Sauerstoffdurchlässigkeit, bei dem Spülgas um Stickstoff handelt, während es sich bei dem Messgas um Stickstoff handelt, dem ein Anteil an Wasserstoff beigemischt ist, der im Bereich von 0,5 bis 5 % liegt.

5. Messverfahren nach einem beliebigen der Ansprüche 1 bis 4, **dadurch gekennzeichnet, dass** es einen Schritt des Messens einer Gasmenge mittels Coulometrie umfasst.

6. Anlage zur Durchführung des Verfahrens zur Messung der Durchlässigkeit der Wand eines Hohlkörpers (6) aus Polymermaterial, wie es in einem beliebigen der vorhergehenden Ansprüche dargelegt ist, wobei die Anlage ein erstes Leitungssystem eines Spülgases umfasst, das dazu befähigt ist, den Hohlkörper (6) zu spülen, sowie ein zweites Leitungssystem eines Messgases, das in den Hohlkörper (6) eingeleitet wird, **dadurch gekennzeichnet, dass** das erste und das zweite Leitungssystem in Teilen übereinstimmen und über Fluidverteilungsmittel (4) derart miteinander verbunden sind, dass das Messgas in den Hohlkörper (6) eingeleitet wird, ohne sich mit dem Messgas zu vermischen.

7. Anlage nach Anspruch 6, **dadurch gekennzeichnet, dass** die Verteilungsmittel (4) mindestens zwei Eintrittsöffnungen (4a; 4d) und eine Austrittsöffnung (4b) aufweisen, und dadurch, dass die beiden Eintrittsöffnungen (4a; 4d) wahlweise jeweils mit der Austrittsöffnung (4b) in Verbindung gebracht werden können.

8. Anlage nach Anspruch 7, **dadurch gekennzeichnet, dass** eine erste Eintrittsöffnung (4a) der Mittel (4) mit einer Quelle zur Abgabe von Messgas verbunden ist, welcher einer Gerät (2) zur Mengenmessung eines gegebenen Gases beigeordnet ist, wobei eine zweite Eintrittsöffnung (4d) der Mittel (4) mit einer Spülgasquelle (10) verbunden ist, und wobei die Austrittsöffnung (4b) des Ventils (4) in Fluidverbindung mit einer Seite der Polymerwand steht, wobei weiterhin eine Leitung (5) die Seite der Polymerwand mit dem Gerät zur Gasmengenmessung in Fluidverbindung bringt.

9. Anwendung des Verfahrens nach einem beliebigen der Ansprüche 1 bis 5 oder der Anlage nach einem beliebigen der Ansprüche 6 bis 8 zur Messung der Sauerstoff- oder Kohlendioxiddurchlässigkeit eines Hohlkörpers (6).

## Claims

1. Method for measuring the permeability to gases of the wall of a hollow body (6) made from polymer material, said method comprising a first step called the conditioning step in which a flushing gas flushes said hollow body (6), and a second step, called the measuring step, in which a measurement gas is introduced into said hollow body (6), the flushing gas and the measurement gas being different, **characterized in that** the flow rate of flushing gas is higher than the flow rate of measurement gas and **in that** the sending of the measurement gas during the second, measuring step is carried out after discharing the flushing gas from the first step to the external surrounding air so that said flushing gas is sent into said hollow body (6) without mixing with said measurement gas.

2. Measurement method according to Claim 1, **characterized in that** the flow rate of flushing gas is more than ten times higher than the flow rate of measurement gas.

3. Measurement method according to Claim 1 or 2, **characterized in that** the flow rate of flushing gas is about 200 cc per minute and **in that** the flow rate of measurement gas is about ten ml per minute.

4. Measurement method according to any one of Claims 1 to 3, **characterized in that**, for measuring the permeability to oxygen, the flushing gas is nitrogen, the measurement gas then being nitrogen mixed with a proportion of hydrogen of between 0.5 and 5%.

5. Measurement method according to any one of Claims 1 to 4, **characterized in that** it comprises a step for measuring a quantity of gas by coulometry.

6. Installation for implementing the method for measuring the permeability of the wall of a hollow body (6) made from polymer material as described in any one of the preceding claims, said installation comprising a first circuit of a flushing gas suitable for flushing the hollow body (6) and a second circuit of a measurement gas introduced into said hollow body (6), **characterized in that** said first and second circuits are partly common and connected to one another via fluid distribution means (4) so that the measurement gas is sent into said hollow body (6) without mixing with said measurement gas.

7. Installation according to Claim 6, **characterized in that** the distribution means (4) comprise at least two inlets (4a; 4d) and one outlet (4b) and **in that** each inlet (4a; 4d) can be communicated selectively with the outlet (4b).

8. Installation according to Claim 7, **characterized in that** a first inlet (4a) of the means (4) is connected to a measurement gas distribution source associated with an instrument (2) for measuring the quantity of a given gas, a second inlet (4d) of the means (4) being connected to a source (10) of flushing gas, and the outlet (4b) of the valve (4) communicating fluidly with one side of said polymer wall, a line (5) moreover making said polymer wall side communicate fluidly with the instrument for measuring the quantity of gas.

9. Application of the method according to any one of Claims 1 to 5 or of the installation according to any one of Claims 6 to 8 for measuring the permeability of a hollow body (6) to oxygen or to carbon dioxide.
